# FASCICULE DE BREVET EUROPEEN

(11) **EP 2 960 964 B1**
(45) Date de publication et mention de la délivrance du brevet: **01.05.2019**
(21) Numéro de dépôt: 15173674.1
(22) Date de dépôt: 24.06.2015
(51) Int. Cl.: H01M 2/02, H01M 2/04, H01M 10/0525, B23K 26/20, H01M 2/12, H01M 2/36

(54) **ACCUMULATEUR ELECTROCHIMIQUE AVEC BOITIER A ASSEMBLAGE PAR SOUDURE AMELIOREE**
ELEKTROCHEMISCHER AKKUMULATOR MIT GEHÄUSE, DAS DURCH VERBESSERTE SCHWEISSUNG ZUSAMMENGEBAUT IST
ELECTROCHEMICAL ACCUMULATOR WITH HOUSING ASSEMBLED BY IMPROVED WELDING

(30) Priorité: 24.06.2014 FR 1455835
(43) Date de publication de la demande: 30.12.2015
(73) Titulaire: COMMISSARIAT À L'ÉNERGIE ATOMIQUE ET AUX ÉNERGIES ALTERNATIVES, 75015 Paris (FR)
(72) Inventeur: DEWULF, Frédéric, 38500 Voiron (FR); JOST, Pierre, 38220 Saint Pierre de Mesage (FR)
(74) Mandataire: Nony

(56) Documents cités:
- EP-A1- 1 067 610
- CN-U- 202 749 423

## Description

### Domaine technique

La présente invention concerne le domaine des générateurs électrochimiques, qui fonctionnent selon le principe d'insertion ou de désinsertion, ou autrement dit intercalation-désintercalation, d'ions dans au moins une électrode.

Elle concerne plus particulièrement un accumulateur électrochimique comportant au moins une cellule électrochimique constituée d'au moins une anode et une cathode de part et d'autre d'un électrolyte, deux collecteurs de courant dont un est relié à l'anode et l'autre à la cathode, et un boîtier métallique agencé pour contenir la(les) cellule(s) électrochimique avec étanchéité en étant éventuellement traversé par une partie des collecteurs de courant formant tout ou partie des bornes de sortie du courant ou pôles.

L'invention a trait à proposer une solution pour améliorer les conditions de soudage par laser entre les différentes pièces constituant le boitier métallique et ainsi fiabiliser la réalisation de l'assemblage du couvercle avec le boîtier.

### Art antérieur

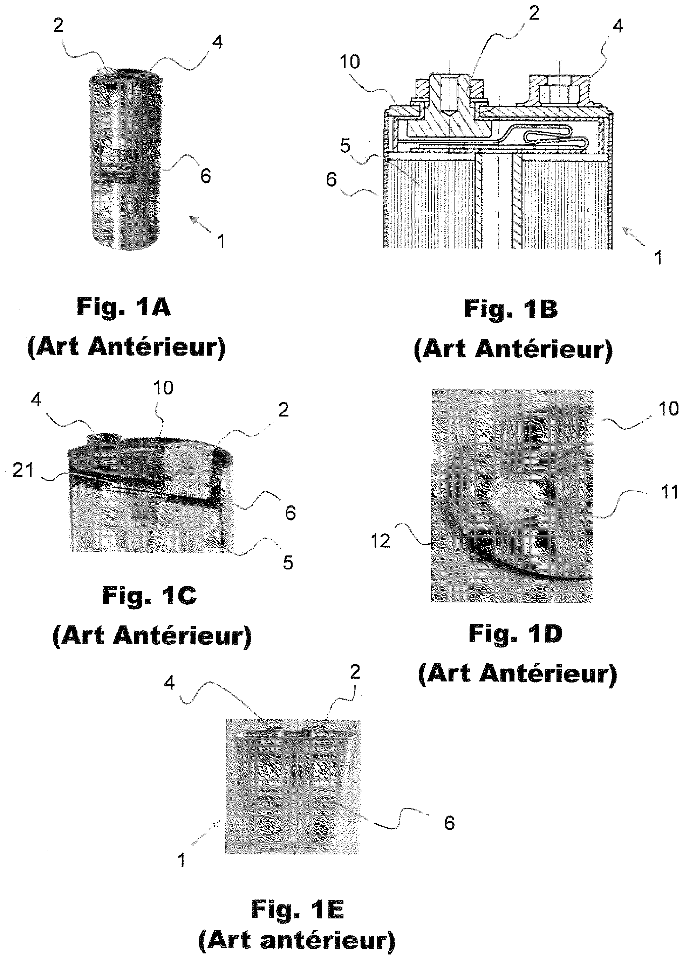

Tel qu'illustré schématiquement en figures 1A, 1B, 1C et 1E, une batterie ou accumulateur lithium-ion 1 comporte usuellement au moins une cellule électrochimique 5 constituée d'un séparateur imprégné d'un constituant électrolyte entre une électrode positive ou cathode et une électrode négative ou anode, un collecteur de courant connecté à la cathode, un collecteur de courant connecté à l'anode et enfin, un boîtier 6, de forme générale cylindrique ou prismatique, agencé pour contenir la(les) cellule(s) électrochimique avec étanchéité tout en étant traversé par une partie des collecteurs de courant 2, 4 formant les deux bornes de sortie du courant.

L'architecture des batteries lithium-ion conventionnelles est une architecture que l'on peut qualifier de monopolaire, car avec une seule cellule électrochimique définissant un faisceau électrochimique comportant une anode, une cathode et un électrolyte. Plusieurs types de géométrie d'architecture monopolaire sont connus:
- une géométrie cylindrique, avec enroulement autour d'un axe cylindrique telle que divulguée dans la demande de brevet US 2006/0121348,
- une géométrie prismatique, avec enroulement autour d'un axe prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF₆.

L'électrode positive ou cathode est constituée de matériaux d'insertion du cation Lithium qui sont en général composite, comme LiFePO₄, LiCoO₂, LiNi_{0.33} Mn_{0.33} Co_{0.33}O₂, déposés sur un feuillard en matériau métallique tel que l'aluminium, appelé collecteur de courant.

L'électrode négative ou anode est très souvent constituée de carbone graphite ou en Li₄TiO₅O₁₂ (matériau titanate), éventuellement également à base de silicium ou de composite formé à base de silicium déposé sur un feuillard en matériau métallique, en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 3,6 Volt.

Une batterie ou accumulateur Li-ion comporte un emballage rigide lorsque les applications visées sont exigeantes où l'on cherche une longue durée de vie, typiquement supérieure à 10 ans avec par exemple des pressions à supporter pour le boitier (vide ou surpression élevée) bien supérieures et un niveau d'étanchéité requis plus strict, typiquement inférieure à 10⁻⁸ mbar.l/s, ou dans des milieux à fortes contraintes comme le domaine naval, aéronautique ou spatial.

Comme illustré en figures 1B et 1C, une des bornes de sortie 2, en général la borne négative 2, traverse le boîtier 6 de manière isolée électriquement et est raccordée électriquement à une électrode de même polarité du faisceau électrochimique 5 au moyen d'une collecteur de courant intermédiaire, sous la forme d'une languette plane 21 repliée sur elle-même. L'autre des bornes de sortie 4, en général la borne positive 4, est quant à elle soudée à une paroi du boîtier 6 lui-même raccordé électriquement à l'électrode du faisceau électrochimique 5 de polarité opposée à celle de la borne 2.

L'utilisation du matériau aluminium dans la conception des boîtiers d'accumulateurs lithium-ion a engendré une diminution de la masse des accumulateurs par rapport aux générations d'accumulateurs auparavant développés avec des boîtiers de type inox ou de type acier nickelé. La diminution de la masse du boîtier par l'utilisation de matériaux de type alliage d'aluminium a permis d'accroître de près de 10% la densité d'énergie massique de ces accumulateurs électrochimiques par rapport aux générations précédentes.

La recherche de l'optimisation de la densité d'énergie massique a conduit à développer des boîtiers dont les parois sont d'épaisseur relativement faible, par exemple égale ou inférieure à 2mm. De telles épaisseurs de parois diminuent en effet la masse du boîtier et augmentent le volume interne disponible des accumulateurs.

Afin d'obtenir une étanchéité de grande qualité, les différentes pièces composant le boîtier, dans lequel est agencée la cellule électrochimique, sont soudées entre elles, notamment par soudage laser.

L'assemblage par soudage laser nécessite de fonctionner à des puissances de soudage élevées afin de mettre en fusion le matériau métallique utilisé et d'amorcer un bain de fusion ensuite maintenu continu pour solidariser mécaniquement entre elles les pièces, par exemple le couvercle et l'enveloppe latérale du boîtier.

De telles puissances provoquent un échauffement important qui peut perturber la qualité des réalisations, notamment au niveau de la profondeur de pénétration à l'interface des parties à souder qui peut devenir trop importante par rapport à l'épaisseur des pièces elles-mêmes, ces dernières étant de faible épaisseur, ce qui peut causer de potentielles brûlures des composants à l'intérieur de l'accumulateur.

Une profondeur de pénétration de soudure trop importante peut également entraîner un effondrement des parties du boîtier à souder entre elles à l'intérieur du volume de l'accumulateur. Ceci a pour conséquence pratique de limiter le volume que peuvent occuper les parties internes à l'accumulateur électrochimique et donc la densité d'énergie de l'accumulateur.

La demande de brevet WO 2010/120906 décrit un accumulateur électrochimique 1 dont le couvercle 10 est soudé à l'enveloppe latérale 6 du boîtier comme représenté en figure 1B. Aucune précaution n'est prise afin d'éviter un échauffement des parties à souder et un effondrement du boîtier à l'intérieur du volume de l'accumulateur lors de l'assemblage du couvercle 10 à l'enveloppe latérale 6 du boîtier.

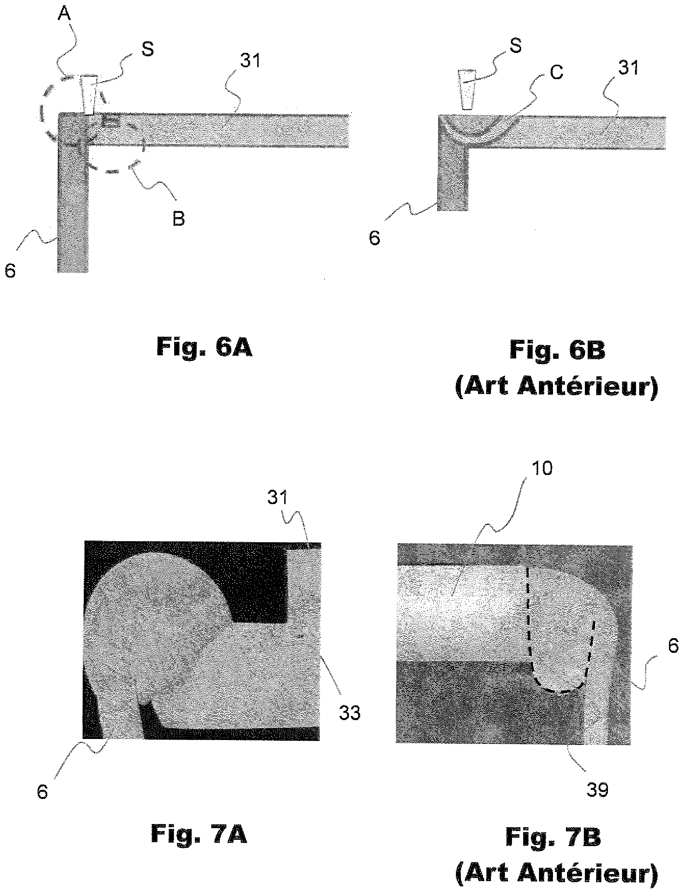

Les demandes de brevet EP 2541642 A1 et FR 2974451 A1 divulguent également un accumulateur électrochimique 1 tel que celui représenté en figure 1B. Le couvercle 10 utilisé pour de tels accumulateurs, représenté en figure 1D, comporte notamment un trou de traversée de borne 11 pour la borne de sortie 2. Un tel couvercle 10 est un simple disque de métal qui ne peut pas être assemblé par soudage laser à l'enveloppe 6 du boîtier sans provoquer un effondrement du couvercle 10 à l'intérieur du volume de l'accumulateur. On pourra également se référer à la figure 7B pour voir un exemple d'effondrement 39 résultant du soudage d'un tel couvercle 10 selon l'état de l'art sur une enveloppe de boitier 6.

EP 1 067 610 A1 divulgue un accumulateur muni d'un couvercle avec une rainure soit entre le couvercle et le godet, soit entre le couvercle opercule et le godet. A la lecture de ce document, il n'est pas possible de savoir si la rainure apporte une fonction à l'accumulateur.

Le modèle d'utilité chinois CN 202 749 423 U divulgue, dans son mode de réalisation de la figure 8(a), un boîtier d'accumulateur électrochimique dont l'enveloppe latérale est soudée par laser à un couvercle qui présente sur sa face du dessus une rainure à section rectangulaire. La rainure divulguée dans ce document a une profondeur comprise entre 0,1 et 0,4 mm et une largeur d'ouverture de la rainure comprise entre 0,1 et 0,4mm qui ne peuvent que couvrir qu'un domaine de petits accumulateurs de dimensions réduites.

Il existe donc un besoin d'améliorer l'assemblage d'un boitier d'accumulateur, notamment en améliorant la qualité de la soudure entre le couvercle et l'enveloppe latérale du boîtier, afin d'éviter la brûlure des composant internes à l'accumulateur et d'augmenter en pratique le volume disponible à l'intérieur du boîtier occupé par la(les) cellule(s) électrochimique(s) et ce pour des dimensions d'accumulateurs importantes.

### Exposé de l'invention

Pour ce faire, l'invention a tout d'abord pour objet un accumulateur électrochimique au lithium comportant :
- au moins une cellule électrochimique constituée d'au moins une anode et une cathode de part et d'autre d'un électrolyte imprégné dans un séparateur,
- un boîtier métallique constitué d'une enveloppe latérale, d'un fond et d'un couvercle, agencé pour contenir la(les) cellule(s) électrochimique(s) avec étanchéité,
- au moins deux bornes de sortie de courant reliées chacune à l'une ou l'autre de l'(des) anode(s) et de la (des) cathode(s).

Selon l'invention, le couvercle et/ou le fond est (sont) constitué(s) d'une plaque métallique comportant une rainure débouchant sur sa face supérieure et délimitant un rebord sur la périphérie de la plaque, la plaque étant soudée à l'enveloppe latérale par une ligne de soudure réalisée entre la rainure et l'enveloppe latérale.

Ainsi, l'invention consiste essentiellement à réaliser une rainure qui permet de concentrer l'échauffement des extrémités des pièces à souder (couvercle et/ou fond avec enveloppe latérale) au passage du faisceau laser.

Autrement dit, la réalisation de la rainure selon l'invention en bordure de couvercle et/ou du fond permet de concentrer les échauffements en limitant la diffusion thermique et donc de réduire le niveau d'énergie nécessaire pour le soudage laser, et ce surtout pour des accumulateurs de dimensions relativement importantes, notamment de diamètre extérieur supérieur à 40mm et/ou de hauteur supérieure à 150 mm.

En effet, généralement plus les dimensions d'accumulateurs sont grandes plus il faut épaissir les paroi des composants, du couvercle et du boîtier intégrant le fond, de dimensions relativement importantes et garantir une résistance mécanique des sections soudées plus importantes pour limiter les déformations des surfaces du boitier sous l'effet de la pression par exemple.

Les avantages procurés par l'invention sont nombreux et peuvent être énumérés comme suit :
- obtention d'un cordon de soudure très homogène et d'aspect très lisse,
- diminution possible de la puissance laser appliquée de près de 20% comparativement aux procédés d'assemblage par soudage selon l'état de l'art, ce qui permet par voie de conséquence de limiter le niveau de diffusion de chaleur dans les pièces de l'assemblage à un niveau bien inférieur à celui généralement observé dans les procédés selon l'état de l'art,
- utilisation possible de pièces à assembler (couvercle et/ou fond avec enveloppe latérale) pour réaliser le boitier, de faibles voire très faibles épaisseur avec un gain afférent sur la densité d'énergie massique de l'accumulateur électrochimique.

Selon un mode de réalisation avantageux, le fond et l'enveloppe latérale sont formés en une seule pièce.

Selon un mode préféré de réalisation, l'accumulateur et le couvercle sont de forme générale cylindrique.

Selon une variante de réalisation, l'accumulateur et le couvercle sont de forme générale prismatique.

Le profil de la rainure peut être rectangulaire, en un arc-de-cercle ou un triangle. D'autres géométries de rainures, sensiblement similaires ou non à celles-décrites ci-dessus, peuvent également jouer le rôle de barrière thermique et aider à concentrer l'échauffement sur les extrémités à souder.

Selon un mode de réalisation, la plaque métallique comporte au moins un trou de traversée d'un pôle de l'accumulateur.

Avantageusement, la plaque métallique peut comporter au moins un trou de membrane de sécurité.

Selon une variante avantageuse de réalisation, la plaque métallique comporte au moins un trou de remplissage.

Selon une variante de l'invention, l'enveloppe latérale, le fond et le couvercle sont en matériau de type alliage d'aluminium.

Cependant, d'autres métaux présentant les caractéristiques souhaitées pour un matériau de boîtier, à savoir une bonne conduction thermique pour pouvoir dissiper la chaleur due au fonctionnement de la cellule électrochimique et une densité faible pour garantir la légèreté de l'accumulateur, peuvent également être utilisés, comme par exemple l'acier inoxydable type 304, 304L ou 305.

Selon un autre mode de réalisation, la largeur du rebord d5 est comprise entre 0,7 et 2,0 mm, de préférence comprise entre 0,85 et 2,0 mm, de préférence comprise entre 0,85 et 2,0 mm.

Selon une variante avantageuse de l'invention, la tranche de la plaque venant au contact de l'enveloppe latérale du boîtier est chanfreinée, l'épaisseur chanfreinée étant de préférence comprise entre un tiers et la moitié de l'épaisseur de la plaque.

Selon une autre variante avantageuse de l'invention, la profondeur de la rainure d2 est comprise entre un tiers et la moitié de l'épaisseur de la plaque de préférence comprise entre 0,45 et 1,5 mm, de préférence encore comprise entre 0,6 et 1 mm.

Cette gamme préférée est un bon compromis à obtenir.

En effet, dans le cas où la profondeur de rainure d2 serait trop faible, typiquement inférieure à 0,6 mm, à même puissance de soudage, il se produit une diffusion thermique horizontale plus importante et par conséquent une qualité de cordon de soudure moins maîtrisée.

Cela peut impliquer d'augmenter la puissance de soudage et par voie de conséquence des échauffements localisés plus importants avec comme corollaire la formation de bourrelets liés à la fonte de métal en volume plus élevé. Augmenter la puissance de soudage peut aussi impliquer des projections de de métal plus fortes, une usure du matériel, des outillages et équipement de soudage prématurée.

A l'inverse, dans le cas où la profondeur de rainure d2 serait trop élevée, typiquement supérieure à 1,0 mm, la résistance mécanique de la plaque (couvercle) sous l'effet de la pression interne serait diminuée.

Aussi pour cette raison, il conviendrait d'abaisser la puissance de soudage pour essayer de réduire l'effet thermique, ce qui peut affecter encore davantage la résistance mécanique en périphérie de la plaque (couvercle).

Selon encore une autre variante avantageuse, l'épaisseur d3 de la paroi du boitier est comprise entre 0, 4 et 0,7 mm.

Selon une caractéristique avantageuse, l'épaisseur du couvercle et/ou du fond d4 est comprise entre 0,7 et 3 mm, de préférence comprise entre 1,2 et 3,0 mm.

L'invention concerne également sous un de ses aspects, un procédé d'assemblage d'un accumulateur électrochimique tel que décrit ci-dessus qui comporte les étapes suivantes :
a/ agencement des différentes parties internes de l'accumulateur à l'intérieur d'une partie de boitier constituée par l'enveloppe latérale et le fond,
b/ emboîtement du couvercle sur l'enveloppe latérale;
c/ soudage laser S du couvercle sur l'enveloppe latérale, la soudure étant effectuée à l'interface entre l'enveloppe latérale et la rainure.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1A est une vue en perspective d'un accumulateur lithium-ion selon l'état de l'art,
- la figure 1B est une vue en coupe axiale d'un accumulateur lithium-ion selon l'état de l'art,
- la figure 1C est une vue en coupe axiale et en perspective d'un accumulateur lithium-ion selon l'état de l'art,
- la figure 1D est une vue en perspective d'un couvercle de boîtier d'accumulateur lithium-ion selon l'état de l'art,
- la figure 1E une reproduction photographique d'un accumulateur lithium-ion prismatique selon l'état de l'art,
- la figure 2A est une vue en perspective d'un couvercle de boîtier d'accumulateur lithium-ion selon un mode de réalisation de l'invention,
- la figure 2B est une vue en perspective d'un couvercle de boîtier d'accumulateur lithium-ion selon un deuxième mode de réalisation de l'invention,
- les figures 2C et 2D sont des vues en coupe axiale d'un couvercle d'un boîtier d'accumulateur lithium-ion selon un mode de réalisation de l'invention,
- les figures 3A à 3C sont des vues de détail de rainures selon différentes variantes de l'invention,
- la figure 4 est une vue en coupe axiale d'un couvercle selon un mode de réalisation de l'invention tel que mis en place avant soudure sur une enveloppe d'un boîtier d'un accumulateur lithium-ion,
- la figure 5 est une vue de détail d'un bord d'un couvercle d'accumulateur lithium-ion selon une variante de réalisation de l'invention,
- la figure 6A est une vue de détail illustrant l'emplacement d'une soudure d'un couvercle sur une enveloppe latérale boîtier d'un accumulateur lithium-ion, conformément à l'invention,
- la figure 6B est une vue de détail illustrant comparativement à la figure 6A une soudure entre un couvercle et une enveloppe latérale d'un boîtier selon l'état de l'art,
- la figure 7A est une vue en coupe axiale d'une soudure d'un couvercle selon l'invention sur une enveloppe latérale d'un boîtier d'un accumulateur lithium-ion,
- la figure 7B illustre comparativement à la figure 7A une coupe axiale d'une soudure entre un couvercle et une enveloppe latérale d'un boîtier selon l'état de l'art,
- la figure 8A est une reproduction photographique en perspective d'un accumulateur lithium-ion cylindrique après assemblage selon un mode de réalisation de l'invention,
- la figure 8B est une reproduction photographique du dessus d'un accumulateur lithium-ion cylindrique après assemblage selon un mode de réalisation de l'invention.

Dans l'ensemble de la présente demande, les termes «inférieur», «supérieur», «bas», «haut», «dessous» et «dessus» sont à comprendre par référence par rapport à un boitier d'accumulateur Li-ion positionné à la verticale avec son couvercle sur le dessus, le dessous du couvercle venant au regard des parties internes de l'accumulateur.

Par « périmètre de la plaque », on entend ici et dans l'ensemble de la présente demande, le périmètre de la surface supérieure de la plaque métallique formant le couvercle du boîtier de l'accumulateur électrochimique.

On a déjà décrit en détail les figures 1A à 1E relatives à la réalisation d'un accumulateur Li-ion. Par souci de clarté, les mêmes éléments d'un accumulateur selon l'état de l'art et d'un accumulateur selon l'invention sont désignés par les mêmes références.

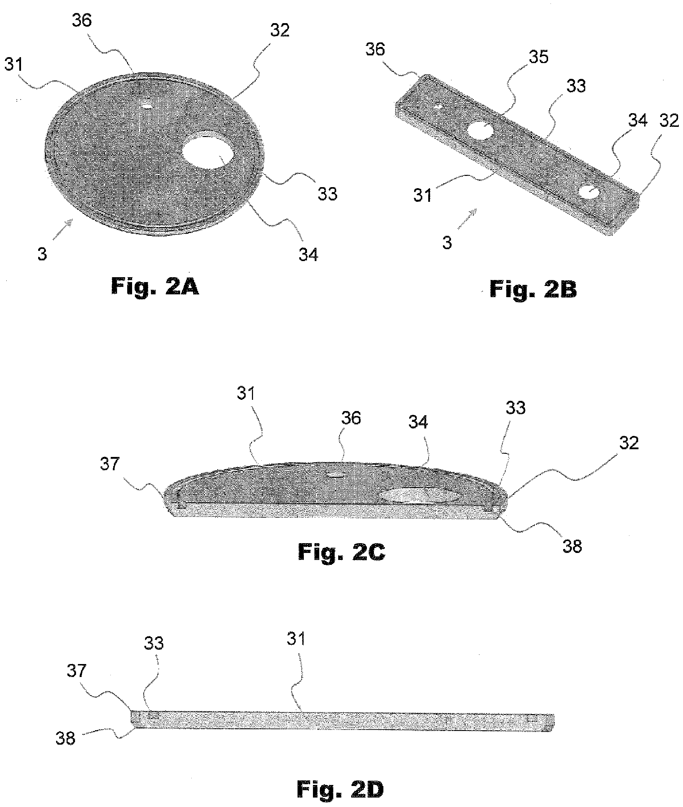

On a représenté en figures 2A, 2C et 2D un exemple de couvercle 3 cylindrique d'accumulateur lithium-ion 1 selon l'invention. Un tel couvercle 3 est constitué d'une plaque 31, de préférence en matériau de type alliage d'aluminium ou en acier inox de type 304, 304L ou 305. La plaque métallique 31 est de faible épaisseur. Cette plaque 31 est traversée de plusieurs trous, notamment d'un trou de traversée de borne 34 et d'un trou 36 servant d'orifice de remplissage. Selon le mode de réalisation représenté en figures 2A, 2C et 2D, la plaque 31 est de forme générale cylindrique.

Selon un autre mode de réalisation représenté en figure 2B, la plaque 31 est de forme générale prismatique. Tel qu'illustré sur cette figure 2B, la plaque 31 est traversée d'un second trou de membrane de sécurité 35. Comme connu, une telle membrane de sécurité permet de limiter la pression interne à l'accumulateur en cas de conditions non nominales de fonctionnement.

Selon l'invention, une rainure 33 est formée dans l'épaisseur de la plaque 31, tout le long du périmètre de la plaque 31, définissant entre la rainure 33 et le périmètre de la plaque 31, un rebord 32 de faible largeur. La rainure 33 longe ainsi tout le périmètre de la plaque 31.

Ainsi, la plaque 31 étant de forme générale cylindrique ou prismatique, la rainure 33 épouse la forme du périmètre de la plaque 31 et est également de forme générale cylindrique ou respectivement prismatique.

La rainure 33 étant formée dans l'épaisseur de la plaque, sa réalisation n'engendre aucun impact sur le volume interne disponible de l'accumulateur et ne nuit donc pas à la densité énergétique massique de l'accumulateur.

Un chanfrein 38 peut également être réalisé sur la tranche 37 de la plaque 31, sur le dessous du couvercle, afin de pouvoir poser et pré-emboîter en utilisant un minimum d'effort le couvercle 3 sur le boîtier 6.

Le boîtier 6 est constitué d'un fond non représenté et d'une enveloppe latérale 6 et du couvercle 3. Le fond et l'enveloppe latérale peuvent être soit une seule et même pièce usuellement appelée « godet », soit deux pièces assemblées, par exemple par soudage. Le couvercle 3 vient ainsi fermer l'enveloppe latérale 6 du boîtier par le haut, sa partie inférieure venant au regard des parties internes de l'accumulateur électrochimique 1 dont le faisceau électrochimique 5. Les dimensions du couvercle 3 sont par ailleurs définies de telle sorte à garantir un accostage parfait avec l'enveloppe latérale 6 du boîtier.

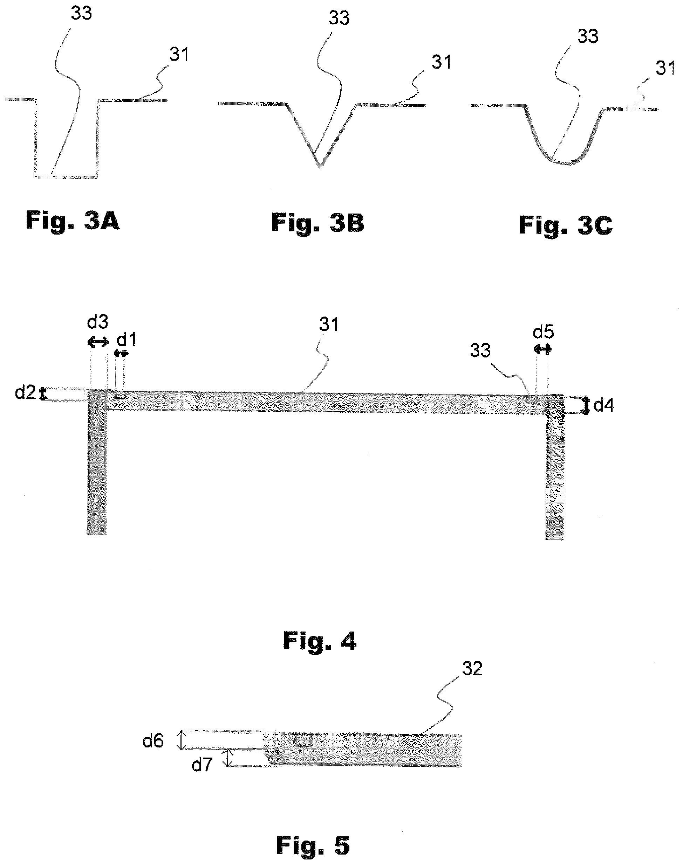

On a représenté en figures 3A, 3B et 3C différents profils de rainures 33 selon différentes variantes de l'invention. La rainure 33 représentée en figure 3A est de forme rectangulaire, la rainure 33 représentée en figure 3B est de forme triangulaire, et la rainure 33 représentée en figure 3C est en forme d'arc-de-cercle. Les rainures 33 représentées sur les figures 3A, 3B et 3C sont toutes trois formées dans l'épaisseur de la plaque 31.

Les rainures 33 représentées sur les figures 3A, 3B et 3C peuvent être réalisées par usinage ou frappe d'emboutissage dans l'épaisseur de paroi du couvercle 3.

Les dimensions caractéristiques d1, d2, d3, d4, d5, d6 et d7 de l'ensemble couvercle 3 et d'une enveloppe latérale 6 du boîtier ont été représentés en figures 4 et 5.

La rainure 33 est de largeur d1 de préférence comprise entre 0,2 et 1,5mm.

La rainure 33 est de profondeur d2 de préférence comprise entre 0,2 et 1,5mm.

L'enveloppe latérale 6 du boîtier est d'épaisseur d3 de préférence comprise entre 0,3 et 1,2m.

La plaque 31 est d'épaisseur d4 de préférence comprise entre 0,7 et 3,0mm.

Le rebord 32 défini entre la rainure 33 et le périmètre de la plaque 31 est de largeur d5 de préférence comprise entre 0,7 et 2,0 mm.

On choisit généralement le dimensionnement de la profondeur d2 de la rainure 33 en fonction de l'épaisseur d4 de la plaque 31. La rainure 33 est réalisée de sorte à ce que sa profondeur d2 soit comprise entre un tiers et la moitié de l'épaisseur d4 de la plaque 31.

Comme représenté sur la figure 5, la tranche 37 de la plaque 31 peut comporter un chanfrein 38, par exemple un chanfrein à 30°. La tranche 37 de la plaque est chanfreinée sur une longueur d7 qui représente de préférence environ un tiers de l'épaisseur d4 de la plaque 31. La tranche est donc non-chanfreinée sur une longueur d6 d'environ deux tiers de l'épaisseur d4 de la plaque 31.

Un exemple de réalisation mis en oeuvre par la demanderesse utilise le dimensionnement suivant:
- rainure 3 de largeur d1 = 1,0mm, de profondeur d2 = 0,80mm,
- enveloppe latérale 6 de boîtier d'épaisseur d3 = 0,5mm,
- plaque 31 d'épaisseur d4 = 2,0mm,
- rebord 32 de largeur d5 = 1,0mm,
- tranche 37 chanfreinée à 30° sur une longueur d7 = 0,8mm.

D'autres exemples de réalisation ont été dimensionnés et sont présentés dans le tableau ci-dessous.

| **d2** | **d3** | **d4** | **d5** |
|---|---|---|---|
| Profondeur rainure | Epaisseur paroi boitier | Epaisseur du couvercle | Largeur du rebord |
| 0,23 | 0,3 | 0,7 | 0,7 |
| 0,32 | 0,35 | 0,9 | 0,75 |
| 0,40 | 0,38 | 1,05 | 0,8 |
| 0,45 | 0,4 | 1,2 | 0,85 |
| 0,6 | 0,45 | 1,5 | 0,9 |
| 0,8 | 0,5 | 2 | 1,0 |
| 1,13 | ∼0,6 | 2,5 | 1,5 |
| 1,5 | ∼0,65 - 0,7 | 3 | 2,0 |

Une fois le couvercle 3 emboîté sur l'enveloppe latérale 6 du boîtier, on réalise la soudure laser entre ces deux pièces 3, 6 en périphérie de la plaque 31.

Avec les gammes de caractéristiques chiffrées dans le tableau ci-dessus, le cordon de soudure réalisé est étanche, de qualité maîtrisée et compact pour optimiser la distance entre le plan de soudure et le plan supérieur du faisceau électrochimique 9.

Dans le cas d'un couvercle 10 sans rainure, comme c'est le cas dans l'art antérieur et tel qu'illustré en figures 6B et 7B, la zone affectée thermiquement C est large car la chaleur se diffuse horizontalement à travers le couvercle 10. On constate une forte pénétration dans l'épaisseur du couvercle du bain de soudure, qui prend la forme une fois la soudure effectuée d'un effondrement 39 en forme de goutte. Cet effondrement, en plus d'occuper un volume non négligeable dans l'accumulateur électrochimique, peut provoquer pendant sa formation la brûlure des parties internes de l'accumulateur.

Comme représenté en figure 6A, la soudure S selon l'invention est effectuée en partie sur le rebord 32 et l'enveloppe latérale 6 du boîtier.

La zone A, incluant le haut de l'enveloppe latérale 6 du boîtier et le rebord 32, concentre l'énergie provenant de la source laser et donc l'échauffement au moment de l'opération de soudage. On peut voir le résultat d'une telle soudure illustré en figure 7A. L'amincissement obtenu en zone B grâce à la rainure 33 ralentit la diffusion de la chaleur dans le couvercle 3. La rainure 33 joue ainsi un rôle de barrière thermique.

Cela a pour intérêt de localiser la zone d'échauffement en zone A et de limiter l'échauffement d'autre parties habituellement présentes sur le couvercle de l'accumulateur (par exemple une borne 2 traversant la paroi du couvercle 3 avec joint plastique).

Un tel couvercle 3 permet également de diminuer la puissance laser appliquée de 20% comparativement à un couvercle 10 selon l'état de l'art et d'obtenir un cordon de soudure très homogène et d'aspect lisse. L'effet de goutte de la matière ne dépasse pas l'épaisseur du couvercle 3 comme on peut le voir en figure 7A. Il n'y a pas d'effondrement qui dépasse de l'épaisseur de couvercle comme c'est le cas avec une soudure d'un couvercle 10 selon l'art antérieur.

La soudure obtenue entre le couvercle 3 et l'enveloppe latérale 6 du boîtier représentée en figures 6A et 7A est parfaitement étanche et ce tout le long de la rainure 33, et permet d'atteindre des niveaux d'étanchéité de l'ordre de 10⁻¹⁰ mbar.l/s sous 1 bar d'hélium. Ce type de soudure avec rainure peut également être réalisé autour d'un orifice central à la plaque métallique, si l'accumulateur électrochimique possède un noyau central creux laissant par exemple passer une lame d'air afin d'optimiser le refroidissement de la cellule électrochimique. Il peut également être directement appliqué pour la soudure du fond et de l'enveloppe latérale du boîtier.

On réalise les étapes suivantes durant la réalisation d'un accumulateur selon l'invention :
a/ agencement des différentes parties internes de l'accumulateur à l'intérieur du godet formé par l'enveloppe latérale 6 et le fond du boitier,
b/ emboîtement du couvercle 3 sur l'enveloppe latérale 6, fermant ainsi l'accumulateur électrochimique 1,
c/ soudage laser S entre le couvercle 3 et l'enveloppe latérale 6, la soudure étant effectuée en partie sur le rebord 32 et l'enveloppe latérale 6.

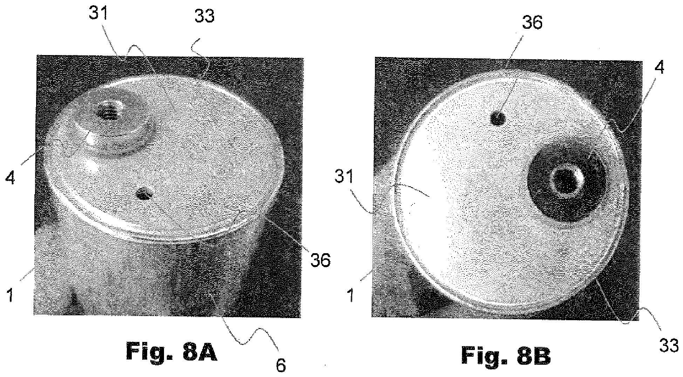

Des exemples de réalisations d'accumulateurs électrochimiques 1 de forme générale cylindrique et prismatique selon ce procédé sont représentés en figures 8A et 8B.

La réalisation de l'accumulateur électrochimique 1 comprend également le cas échéant les étapes suivantes :
a1/ connexion du collecteurs de courant à la borne 2,
a2/ agencement d'une borne 2 et des joints plastiques sur le couvercle 3 pour réaliser une traversée,
a3/ soudage sur le couvercle 3 d'une borne 4.

L'invention n'est pas limitée aux exemples qui viennent d'être décrits ; on peut notamment combiner entre elles des caractéristiques des exemples illustrés au sein de variantes non illustrées.

## Revendications

1. Accumulateur électrochimique (1) au lithium comportant :
- au moins une cellule électrochimique (5) constituée d'au moins une anode et une cathode de part et d'autre d'un électrolyte imprégné dans un séparateur,
- un boîtier métallique (6) constitué d'une enveloppe latérale, d'un fond et d'un couvercle (3), agencé pour contenir la(les) cellule(s) électrochimique(s) (5) avec étanchéité,
- au moins deux bornes de sortie de courant (2,4) reliées chacune à l'une ou l'autre de l'(des) anode(s) et de la (des) cathode(s),
le couvercle (3) et/ou le fond étant constitué d'une plaque métallique (31) comportant une rainure (33) débouchant sur sa face supérieure et délimitant un rebord (32) sur la périphérie de la plaque (31), la plaque (31) étant soudée à l'enveloppe latérale (6) par une ligne de soudure réalisée entre la rainure (33) et l'enveloppe latérale (6),
**caractérisé en ce que** :la largeur (d5) du rebord (32) est comprise entre 0,7 et 2,0 mm.

2. Accumulateur selon la revendication 1, le fond et l'enveloppe latérale (6) étant formés en une seule pièce.

3. Accumulateur selon l'une des revendications précédentes, le profil de la rainure étant rectangulaire, en un arc-de-cercle ou un triangle.

4. Accumulateur selon l'une des revendications précédentes, la plaque métallique (31) comportant au moins un trou de traversée d'un pôle de l'accumulateur (34).

5. Accumulateur selon l'une des revendications précédentes, la plaque métallique (31) comportant au moins un trou de membrane de sécurité (35).

6. Accumulateur selon l'une des revendications précédentes, la plaque métallique (31) comportant au moins un trou de remplissage (36).

7. Accumulateur selon l'une des revendications précédentes, l'enveloppe latérale, le fond et le couvercle étant en matériau de type alliage d'aluminium.

8. Accumulateur selon l'une des revendications précédentes, la largeur (d5) du rebord (32) étant comprise entre 0,85 et 2, 0 mm.

9. Accumulateur selon l'une des revendications précédentes, la tranche (37) de la plaque (31) venant au contact de l'enveloppe latérale du boîtier (6) étant chanfreinée, l'épaisseur chanfreinée (d7) étant de préférence comprise entre un tiers et la moitié de l'épaisseur (d4) de la plaque (31).

10. Accumulateur selon l'une des revendications précédentes, la profondeur de la rainure (d2) étant comprise entre un tiers et la moitié de l'épaisseur d4 de la plaque, de préférence comprise entre 0,45 et 1,5 mm, de préférence encore comprise entre 0,6 et 1 mm.

11. Accumulateur selon l'une des revendications précédentes, l'épaisseur (d3) de la paroi du boitier étant comprise entre 0, 4 et 0,7 mm.

12. Accumulateur selon l'une des revendications précédentes, l'épaisseur du couvercle et/ou du fond (d4) étant comprise entre 0,7 et 3 mm, de préférence comprise entre 1,2 et 3,0 mm.

13. Procédé d'assemblage d'un accumulateur électrochimique selon l'une quelconque des revendications précédentes comportant les étapes suivantes :
a/ agencement des différentes parties internes de l'accumulateur à l'intérieur d'une partie de boitier constituée par l'enveloppe latérale (6) et le fond,
b/ emboîtement du couvercle (3) sur l'enveloppe latérale (6);
c/ soudage laser (S) du couvercle (3) sur l'enveloppe latérale (6), la soudure étant effectuée à l'interface entre l'enveloppe latérale (6) et la rainure (33), **caractérisé en ce que**: la largeur (d5) du rebord (32) est comprise entre 0,7 et 2,0 mm.

## Patentansprüche

1. Elektrochemischer Lithium-Akkumulator (1), umfassend:
- mindestens eine elektrochemische Zelle (5), die von mindestens einer Anode und einer Kathode beiderseits eines Elektrolyts gebildet ist, der in einem Separator imprägniert ist,
- ein Metallgehäuse (6), das von einer seitlichen Hülle, einem Boden und einem Deckel (3) gebildet ist, das angeordnet ist, die elektrochemische(n) Zelle(n) (5) dicht zu enthalten,
- mindestens zwei Stromausgangsanschlüsse (2, 4), die jeweils mit der einen oder der anderen der Anode(n) und der Kathode(n) verbunden sind,
wobei der Deckel (3) und/oder der Boden von einer Metallplatte (31) gebildet ist, die eine Rille (33) umfasst, welche auf ihrer Oberseite mündet und eine Kante (32) auf dem Umfang der Platte (31) begrenzt, wobei die Platte (31) durch eine Schweißlinie, die zwischen der Rille (33) und der seitlichen Hülle (6) ausgebildet ist, an die seitliche Hülle (6) geschweißt ist,
**dadurch gekennzeichnet, dass**: die Breite (d5) der Kante (32) zwischen 0,7 und 2,0 mm liegt.

2. Akkumulator nach Anspruch 1, wobei der Boden und die seitliche Hülle (6) einstückig ausgebildet sind.

3. Akkumulator nach einem der vorhergehenden Ansprüche, wobei das Profil der Rille rechteckig, ein Kreisbogen oder ein Dreieck ist.

4. Akkumulator nach einem der vorhergehenden Ansprüche, die Metallplatte (31) umfassend mindestens ein Durchgangsloch eines Pols des Akkumulators (34).

5. Akkumulator nach einem der vorhergehenden Ansprüche, die Metallplatte (31) umfassend mindestens ein Sicherheitsmembranloch (35).

6. Akkumulator nach einem der vorhergehenden Ansprüche, die Metallplatte (31) umfassend mindestens ein Füllloch (36).

7. Akkumulator nach einem der vorhergehenden Ansprüche, wobei die seitliche Hülle, der Boden und der Deckel aus einem Material des Typs Aluminiumlegierung sind.

8. Akkumulator nach einem der vorhergehenden Ansprüche, wobei die Breite (d5) der Kante (32) zwischen 0,85 und 2,0 mm liegt.

9. Akkumulator nach einem der vorhergehenden Ansprüche, wobei der Rand (37) der Platte (31), der mit der seitlichen Hülle des Gehäuses (6) in Kontakt tritt, abgeschrägt ist, wobei die abgeschrägte Dicke (d7) vorzugsweise zwischen einem Drittel und der Hälfte der Dicke (d4) der Platte (31) beträgt.

10. Akkumulator nach einem der vorhergehenden Ansprüche, wobei die Tiefe der Rille (d2) zwischen einem Drittel und der Hälfte der Dicke d4 der Platte, vorzugsweise zwischen 0,45 mm und 1,5 mm, besser noch zwischen 0,6 und 1 mm beträgt.

11. Akkumulator nach einem der vorhergehenden Ansprüche, wobei die Dicke (d3) der Wand des Gehäuses zwischen 0,4 und 0,7 mm beträgt.

12. Akkumulator nach einem der vorhergehenden Ansprüche, wobei die Dicke des Deckels und/oder des Bodens (d4) zwischen 0,7 und 3 mm, vorzugsweise zwischen 1,2 und 3,0 mm beträgt.

13. Verfahren zum Zusammenbau eines elektrochemischen Akkumulators nach einem der vorhergehenden Ansprüche, umfassend die folgenden Schritte:
a. Anordnen der verschiedenen Innenteile des Akkumulators innerhalb eines Gehäuseabschnitts, der von der seitlichen Hülle (6) und dem Boden gebildet wird,
b. Aufstecken des Deckels (3) auf die seitliche Hülle (6) ;
c. Laserschweißen (S) des Deckels (3) auf die seitliche Hülle (6), wobei das Schweißen an der Grenzfläche zwischen der seitlichen Hülle (6) und der Rille (33) ausgeführt wird, **dadurch gekennzeichnet, dass**: die Breite (d5) der Kante (32) zwischen 0,7 und 2,0 mm liegt.

## Claims

1. Lithium electrochemical accumulator (1) including:
- at least one electrochemical cell (5) consisting of at least one anode and one cathode on either side of an electrolyte impregnated into a separator;
- a metal housing (6) consisting of a lateral envelope, a bottom and a cover (3), which is arranged to contain the one or more electrochemical cells (5) in a sealtight manner;
- at least two current output terminals (2, 4), each of which is connected to one or the other of the one or more anodes and the one or more cathodes,
the cover (3) and/or the bottom consisting of a metal plate (31) including a groove (33) opening onto its upper face and delimiting a rim (32) on the periphery of the plate (31), the plate (31) being welded to the lateral envelope (6) by means of a weld seam formed between the groove (33) and the lateral envelope (6),
**characterized in that**: the width (d5) of the rim (32) is between 0.7 and 2.0 mm.

2. Accumulator according to Claim 1, the bottom and the lateral envelope (6) being formed in one piece.

3. Accumulator according to either of the preceding claims, the profile of the groove being rectangular, a circular arc or a triangle.

4. Accumulator according to one of the preceding claims, the metal plate (31) including at least one through-hole for a pole of the accumulator (34).

5. Accumulator according to one of the preceding claims, the metal plate (31) including at least one safety membrane hole (35).

6. Accumulator according to one of the preceding claims, the metal plate (31) including at least one filling hole (36).

7. Accumulator according to one of the preceding claims, the lateral envelope, the bottom and the cover being made of an aluminium alloy material.

8. Accumulator according to one of the preceding claims, the width (d5) of the rim (32) being between 0.85 and 2.0 mm.

9. Accumulator according to one of the preceding claims, the edge face (37) of the plate (31) making contact with the lateral envelope of the housing (6) being chamfered, the chamfered thickness (d7) preferably being between a third and half of the thickness (d5) of the plate (31).

10. Accumulator according to one of the preceding claims, the depth of the groove (d2) being between a third and half of the thickness (d4) of the plate, preferably between 0.45 and 1.5 mm, more preferably between 0.6 and 1 mm.

11. Accumulator according to one of the preceding claims, the thickness (d3) of the wall of the housing being between 0.4 and 0.7 mm.

12. Accumulator according to one of the preceding claims, the thickness of the cover and/or of the bottom (d4) being between 0.7 and 3 mm, preferably between 1.2 and 3.0 mm.

13. Process for assembling an electrochemical accumulator according to any one of the preceding claims, including the following steps:
a) arranging the various internal parts of the accumulator inside a housing part consisting of the lateral envelope (6) and the bottom;
b) slotting the cover (3) onto the lateral envelope (6);
c) laser-welding (S) the cover (3) to the lateral envelope (6), the welding being carried out at the interface between the lateral envelope (6) and the groove (33), **characterized in that**: the width (d5) of the rim (32) is between 0.7 and 2.0 mm.
